# EUROPEAN PATENT APPLICATION

(11) **EP 1 376 321 A1**
(43) Date of publication of application: **02.01.2004**
(21) Application number: 01917555.3
(22) Date of filing: 28.03.2001
(51) Int. Cl.: G06F 3/033, H04N 5/445, H04N 5/00

(54) **INTERACTIVE CONTENT PRESENTING DEVICE AND METHOD**

(71) Applicant: FUJITSU LIMITED, Kawasaki-shi, Kanagawa 211-8588 (JP)
(72) Inventor: HONDA, Fumio; c/o FUJITSU LIMITED, Kawasaki-shi, Kanagawa 211-8588 (JP); SHIBATA, Seiki; c/o FUJITSU LIMITED, Kawasaki-shi, Kanagawa 211-8588 (JP); HASEGAWA, Eiji; c/o FUJITSU LIMITED, Kawasaki-shi, Kanagawa 211-8588 (JP)
(74) Representative: Kreutzer, Ulrich, Dipl.-Phys.
(86) International application number: PCT/JP2001/002581
(87) International publication number: WO 2002/079966

(57) **Abstract**

An interactive content presenting device and method are provided that allow interactive contents produced on the premise of utilizing the direction indicating function of a remote controller or the like, to perform an interaction by a pointing device, such as a mouse or touch panel, designating coordinates on a screen.

The position of an interactive component image on a display device such as a monitor for displaying contents is designated by a pointing device, and the positional relationship with another interactive component image providing a base point is converted into one direction or a combination of directions. Then, this converted combination is converted into a signal corresponding to one from a remote controller by an emulating section that emulates the action of the remote controller, whereby an interaction with interactive contents is performed by the pointing device.

## Description

### Technical Field

The present invention relates to the presentation of contents including images, voices, and texts. More particularly, the present invention pertains to an interactive content presenting device and method for displaying interactive contents that varies in the displayed substance of the contents in accordance with an operation of a viewer with respect to the contents.

### Background Art

The full-scale digital television broadcast has been commenced, and a broadcasting form such that data are broadcasted concurrently with images and voices, is coming into widespread use. The data broadcast allows various types of broadcast, and enables interactive contents that give importance to interaction between broadcasted substance and viewership to be broadcasted. The interactive contents refer to contents configured so that a viewer operates contents displayed on the screen of a television or the like, and that the displayed substance varies in correspondence with this operation. Specifically, the interactive contents refer to contents configured so that, when, for example, a button-shaped image is displayed on an image, and this button is selected by using an input device such as remote controller, the image is switched into a corresponding image. The image to be operated by a viewer, such as the aforementioned button, is referred to as an interactive component (or interactive component image).

The distance between a display device, such as a television monitor, displaying the contents and the viewer is determined by the range of clear vision that is regarded' as being best suited to an individual display-screen size. For example, in the current high-density television broadcast, it is recommended to watch the television from a position apart from the screen thereof by a distance about three times the longitudinal length of the screen. Accordingly, when watching television broadcast, viewership watch images from a position apart from display device, and therefore, they often control the channel selection or volume adjustment by a remote controller (hereinafter, referred to as RC).

Therefore, also in the case of data broadcast, interactive contents are displayed on a television monitor, and hence, the displayed contents are watched from a location some distance from the screen thereof, and the displayed contents are operated. Accordingly, the above-described contents based on the premise of interacting with viewership are produced on the assumption that the contents are operated by using the RC. Specifically, a content producer describes contents so that a viewer uses a cursor key provided on the RC indicating the up, down, right, and left directions, to move a focus for designating an interactive component, and so that the viewer then performs selection by a determination key. Here, "moving a focus" refers to "designation changing the designated interactive component to another interactive component", or "designating an interactive component other than the selected interactive component".

As compared with the conventional television broadcast, the data broadcast provides more abundant information and a larger number of broadcast programs, and is characterized by clearer images. Consequently, in personal computers (hereinafter referred to as PCs) becoming widespread at a rapid pace, it is expected that opportunities to watch the data broadcast will increase. Generally, in the PCs, the position on the monitor is indicated by a pointing device, such as a mouse or touch panel indicating a position on the screen of a display device.

As described above, however, interactive contents provided by data broadcast are produced on the premise of being operated by an RC, and it is not taken into account to operate contents by a pointing device.

Therefore, when the interactive contents displayed on the monitor of a PC is operated by the pointing device such as a mouse or touch panel, there is a risk that the interactive contents would perform an action such as to run counter to the intent of the producer or cause trouble.

### Disclosure of Invention

The object of the present invention to provide a device and method that allow contents produced on the premise of being operated (interacting) by using a device indicating a direction, such as an RC, to be operated by a pointing device that designates coordinates. For this purpose, in an interactive content presenting device according to the present invention, an interactive component produced on the premise of being indicated in the up, down, right, and left directions by a remote controller or the like, is displayed on the display section of a monitor or the like. When the interactive component is indicated by a coordinate input section, such as a touch panel or mouse, indicating coordinates of the display section, the coordinates indicated by the coordinate input section are converted by the coordinate converting section into a combination of the above-described up, down, right, and left directions, thereby designating a target interactive component using the pointing device.

As describe above, because the coordinates indicated by the pointing device with respect to contents is converted into a combination of the up, down, right, and left directions, it becomes possible to indicate and select contents produced on the premise of being indicated and selected by an RC or the like.

To achieve the above-described object, the present invention provides an interactive content presenting device including a display section that displays an image; a coordinate input section that designates coordinates on the screen of the display section; a coordinate converting section that converts the positional relationship between the coordinates designated by the coordinate input section and a predetermined position on the screen of the display section into one direction or a combination of plurality of directions; and a signal converting section that converts this combination into a predetermined signal, for example, a signal corresponding to a direction indicating signal outputted from a detector receiving a signal from an RC.

Furthermore, to achieve the above described object, the present invention provides an interactive content presenting device having a content processing section that processes a signal inputted to an interface section to display it as an image on the display section, wherein the positional relationship between coordinates designated by the coordinate input section that designates the coordinates on the screen of the display section and a predetermined position displayed on the display section, is converted into one direction or a combination of plurality of directions by a coordinate converting section, wherein the converted one direction or combination of directions is converted into a predetermined signal by an emulator section, and wherein the converted predetermined signal is inputted to the content processing section.

Moreover, the present invention provides an interactive content presenting device including a content processing section that signal-processes a signal inputted via an interface section into image data; a display section that displays the image data; a coordinate input section that designates coordinates on the screen of the display section; a coordinate converting section that converts the positional relationship between the coordinates designated by the coordinate input section and a first specified position displayed on the display section into one direction or a combination of plurality of directions reaching the designated coordinates from the first specified position via another specified position; and an emulator section that converts the one direction or the combination into a predetermined signal, wherein the predetermined signal converted by the emulator is inputted to the content processing section.

Here, a specified position refers to an interactive component image displayed on the display section. Also, "another specified position" refers to an interactive component image displayed on the display section, and simultaneously an interactive component image other than the one displayed on the first specified position.

Furthermore, in order to display, on the above-described interactive content presenting device, contents transmitted thereto via radio waves or a line and contents recorded in a storage medium, the present invention provides an interactive content presenting device having an interface section for receiving these contents.

The present invention provides an interactive content presenting device having a storage section that stores correlation between two interactive components as a correlation represented by one direction or a combination of a plurality of directions.

Moreover, to achieve the above described object, the present invention provides an interactive content presenting method including a first step of designating coordinates on a screen; a second step of converting the positional relationship between a predetermined position on the screen and the coordinates designated in the first step into one direction or a combination of plurality of directions; and a third step of converting the converted one direction or combination of the plurality of directions into a predetermined signal.

Moreover, to achieve the above described object, the present invention provides an interactive content presenting method including a first step of designating a first position in an image; a second step of producing one direction or a combination of plurality of directions reaching the first position from a second position via a specified position in the image, in order to obtain the positional relationship between the second position and the first position in the image; and a third step of converting the combination into a predetermined signal.

A recording medium and program recording the above-described method, and an interactive content presenting device mounting these are provided.

Moreover, to achieve the above described object, the present invention provides an interactive content presenting program in an interactive content presenting device including a display section that displays, on a screen, contents and an interactive component image corresponding to the contents, and a coordinate input section that inputs coordinates corresponding to the display section for inputting data by the selection of the interactive component image. This interactive content presenting program includes the step of receiving the correlation between a plurality of interactive component images displayed on the screen and a cursor key for selecting the interactive component image; the step of inputting, from the coordinate input section capable of designating coordinates, the position in which the plurality of interactive component images has been displayed; the step of producing, from the above-described correlation, a combination of directions of the cursor key for moving from the inputted coordinates to a designated interactive component image; and the step of designating an interactive component image based on the combination of directions of the cursor key. Also, the present invention provides an interactive content presenting device that selects an interactive component image displayed on the screen, based on this program.

### Brief Description of the Drawings

Fig. 1 is a diagram showing an example of a display screen with a view to illustrating the outline of the present invention.
Fig. 2(A) is a diagram illustrating a case where an interactive component on the screen shown in Fig. 1 is selected by a remote controller, while Fig. 2(B) is a diagram illustrating a case where an interactive component is selected by a pointing device.
Fig. 3 is a schematic view showing an example of a content presenting device according to the present invention.
Fig. 4 is a schematic view of an interactive content image taken as an example for illustrating the content presenting device according to the present invention.
Fig. 5 is a view showing actions of the interactive contents shown in Fig. 4.
Fig. 6 is a view showing the definitions of "jump by step" actions, which are actions of the interactive content presenting device shown in Fig. 4.
Fig. 7 is a view showing the correlation among the direction control of a remote controller, the movement of the focus, variations in the field value, when the interactive contents shown in Fig. 4 is operated by the remote controller.
Fig. 8 is a block diagram illustrating the outline of a content presenting device shown in a first embodiment of the present invention.
Fig. 9 is an example of a processing flowchart for route searching used in the first embodiment.
Fig. 10 is a diagram showing an example of route searching in the first embodiment.
Fig. 11 is a block diagram illustrating the outline of a content presenting device shown in a second embodiment of the present invention.
Fig. 12 is a view of showing the positional relationship of two interactive components, the positional relationship being represented by the combination of directions.
Fig. 13 is a block diagram showing the outline of a third embodiment of the present.

### Best Mode for Carrying Out the Invention

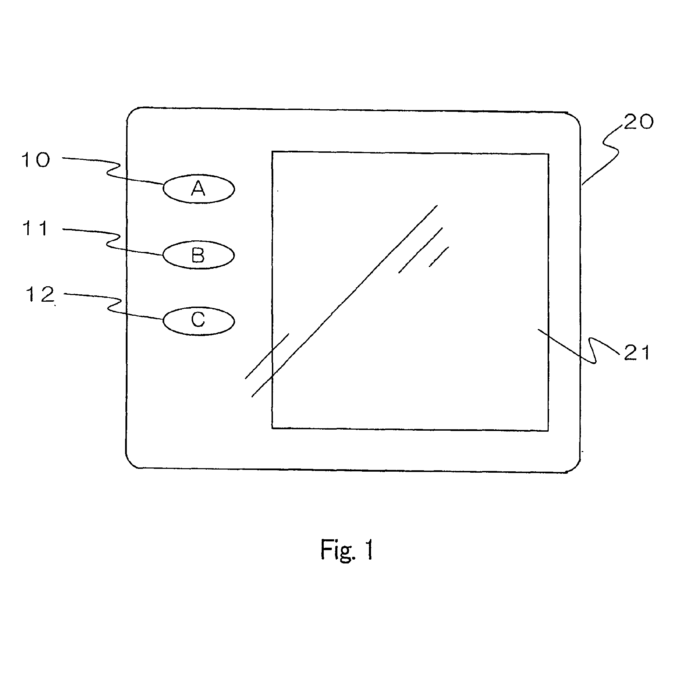

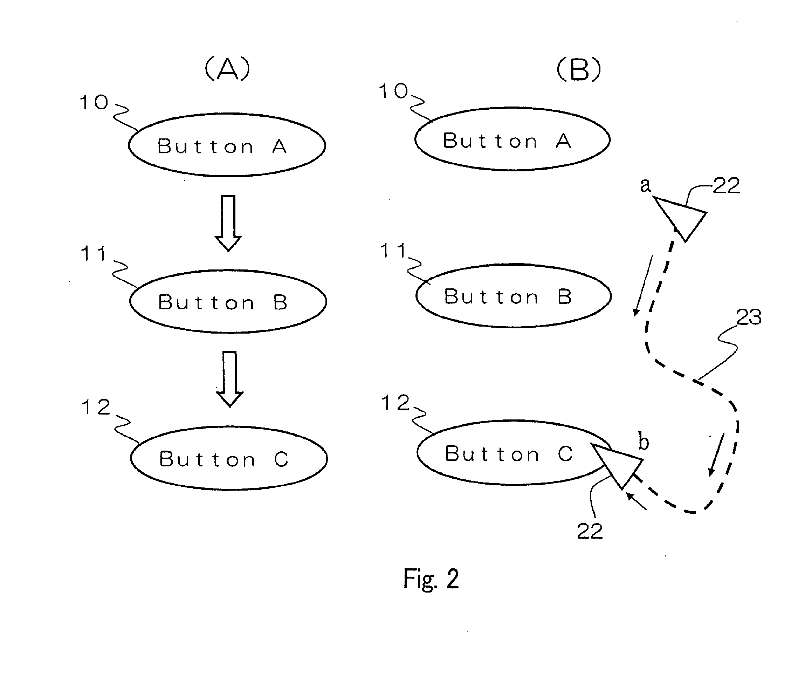

The outline of the present invention will be described with reference to Figs. 1 and 2. Fig. 1 is a schematic view of an image presented on the screen 20 of a monitor of a television unit or a PC. Buttons A 10, B 11, and C 12 in the screen 20 are interactive components. Specifically, when the button A 10 is assumed as a home position, if a viewer depressed the downward key of the RC, for example, the button B blinks, changes in the shape, or changes in the display color, thereby clearly showing that the button B has been selected. Then, if the viewer depresses the determination key of the RC, this means that the button B has been selected and determined, and an image corresponding to this selection is displayed in an area 21. In this manner, the interactive component is produced so as to allow an interaction (i.e., in the above example, this means that the viewer selects an interactive component on the screen) to be performed by using an RC or the like.

Next, issues of the selection method by the pointing device will be described by showing, in (A) in Fig. 2, a case where the buttons A, B, and C are selected by an RC, and showing, in (B) in Fig. 2, a case where the buttons A, B, and C are selected by a mouse as a pointing device. While the buttons A, B, and C, which are interactive components in Figs. 1 and 2, can be arbitrarily arranged, a case where they are arranged in line in the up-and-down direction are illustrated here as an example. When the buttons A, B, and C are to be selected/determined by the RC, the buttons are selected by using an upward or downward key in this instance, as described above. Specifically, when changing the selection from the button A 10 to the button C, the downward key of the RC is depressed two times.

On the other hand, when using a mouse as an appointing device, in order to select the button C 12 with the button A 10 assumed as the home position, a cursor 22 located at an arbitrary position "a" is moved up to a position "b" within a predetermined area of the button C 12, as shown in (B) in Fig. 2. The routes 23 for this movement are different every time. Also, the cursor 22 is directly moved to the button C 12, which is a selected destination, without passing through the button B 11. In order to obtain the result of having selected the button C as in the case of (A) in Fig. 2, by such a selection by the mouse, it is necessary to convert the movement of the cursor 22 from the position "a" via the route 23 to the position "b", into an action equivalent to depressing the downward key of the RC two times.

Hereinafter, detailed descriptions will be made of a content presenting device and method that properly selects an interactive component even by the pointing device described above, without changing the described substance of contents.

### [First Embodiment]

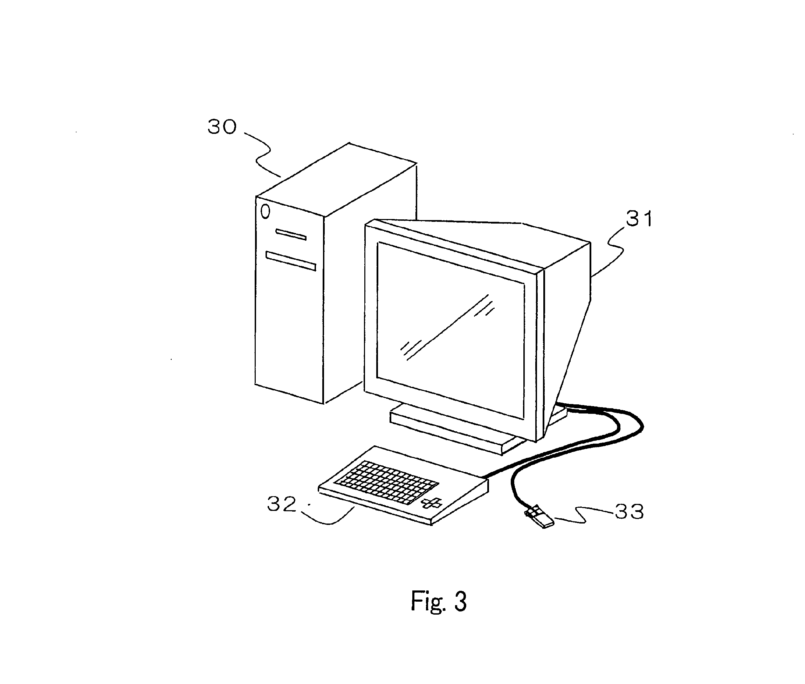

In a first embodiment according to the present invention, a case where interactive contents are received from data broadcast will be chiefly explained. Fig. 3 is a view showing an example of a content presenting device according to the present invention. This content presenting device is configured to include a personal computer body 30, monitor 31, key board 32, and mouse 33. Contents are received through a communication interface section via a broadcast receiving device provided inside or outside the personal computer body 30. While it is not illustrated in the figure, a power supply is applied to the personal computer 30 through a power supply cable.

As described above, in the first embodiment, a mouse is used as a pointing device. However, a touch sensor, which detects a touch position by a change in its resistance value when a finger touches it, or which optically detects the position of the finger, or the like, may be used. Alternatively, another pointing device such as a coordinate detector may be employed by providing it on the screen of the monitor 31, or in the vicinity of the monitor 31.

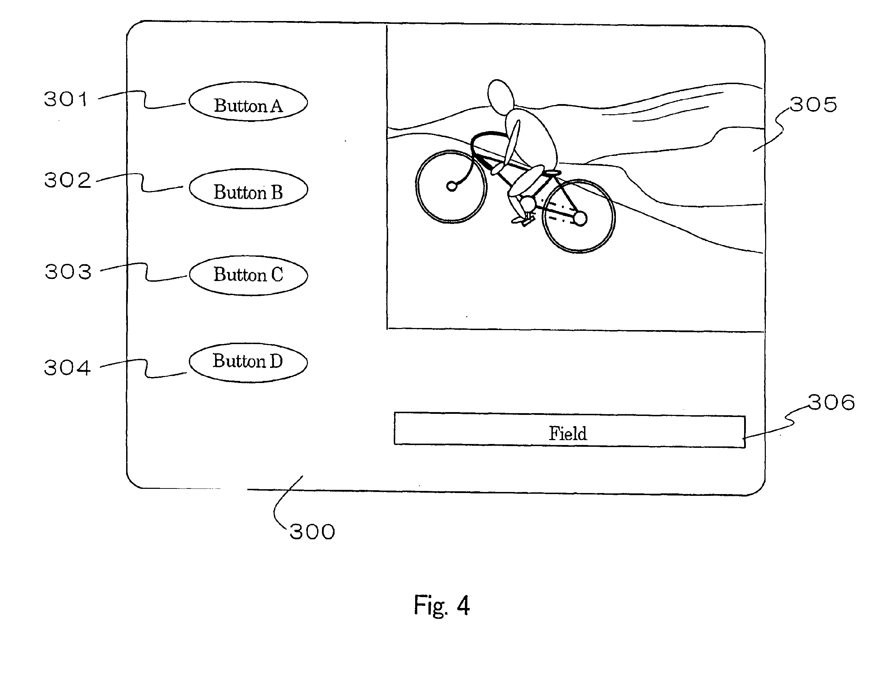

Next, one example of an interactive contents that are operated by an RC having direction keys will be described with reference to Figs. 4 to 7. In Fig. 4, buttons A 301, B 302, C 303, and D 304, which are each an interactive component, are longitudinally arranged in line in the screen 300 of a monitor or the like, and the image corresponding to a button selected by a viewer is displayed in an area 305 in the screen 300. A field 306 is for displaying states updated every time a button is depressed, and it is equivalent to register contents that have been made viewable. In this embodiment, the field 306 is displayed on the screen, but it does not necessarily require to be displayed thereon.

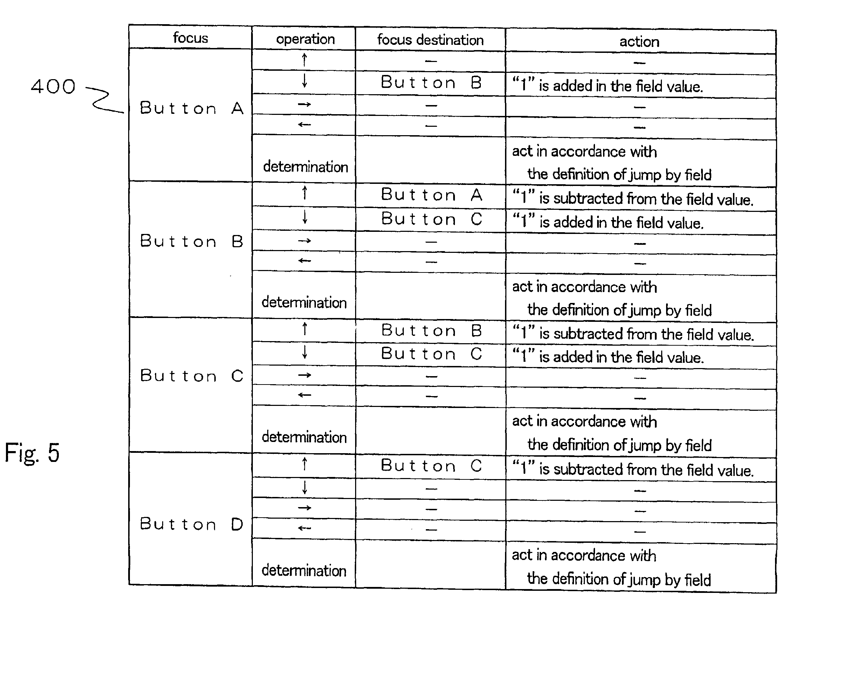

Fig. 5 is a correspondence table 400 that shows the correspondence between operations of RC and actions of the above-described contents. In this correspondence table, currently selected buttons, that is, focused buttons, are displayed in a "focus" column 400, and operational keys such as up, down, right, and left direction keys, and a determination key are displayed in an "operation" column. Also, destinations of the focus when these keys are operated, namely, selected interactive components, are displayed in a "focus destination" column, and a description on an action of each of the updates of field value and screen is displayed in an "action" column.

Hereinafter, detailed descriptions of the correspondence table will be made. With the button A currently selected, when the upward key of the RC is depressed (indicated by the arrow ↑ in the "operation" column), the focus remains at the current position of the button A without moving (indicated with a symbol "-" in the "focus destination" column), since there is provided no interactive component in the upward direction of the button A 301, as shown in Fig. 4. Therefore, no update of screen is performed (indicated with the symbol "-" in the "action" column).

With the button A currently selected, when the downward key of the RC is depressed, the button B becomes a focus destination (described as "Button B" in the "focus destination" column), since there is provided the button B 302 as an interactive component, in the downward direction of the button A 301, as shown in Fig. 4. In this manner, if there is a button A, B, C, or D, which is an interactive component, in the destination direction, that button becomes a focus destination. In this embodiment, a numeral value "1" is added to the field value. Next, when a leftward key (indicated with the arrow "←"), or a rightward key (indicated with the arrow "→") is depressed, the focus position does not move in either case, since there is provided no interactive component on the left or right of the button A 301, as shown in Fig. 4. The field value, therefore, is not updated. Also, in this key operation example, when the downward key is depressed and there is an interactive component in the downward direction, as shown in Fig. 5, "1" is added to the field value. On the other hand, when the upward key is depressed and there is an interactive component in the upward direction, "1" is subtracted from the field value.

Next, with the button A focused, when the determination button is depressed, a jump corresponding to the field value at that time is performed (described as "act in accordance with the definition of jump by field" in the "action" column).

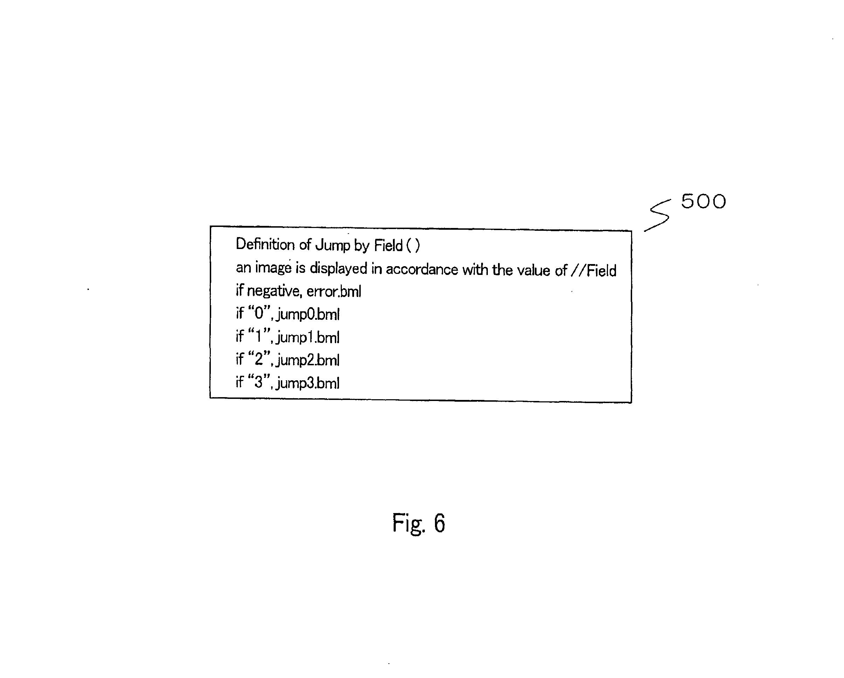

This "jump by field" will now be described with reference to Fig. 6. According to this definition, the value recorded in the field 306 shown in Fig. 4, that is, the field value is assumed as a variable, and when the determination key is depressed, an image to be displayed in the area 305 in Fig. 4 is designated in accordance with this field value. In the definition 500, "if negative, error.bml" means that, if the field value is negative, the contents named "errror" that have been described by bml (Broadcast Markup Language) are displayed in the area 305. Likewise, when the field value is "0", it is defined that the contents named "jump0" are displayed in the area 305. As described above, in the first embodiment, a case where contents are received from data broadcast has been taken as an example. Depending on the substance of contents, another description languages can be used as a description language used for the definition of the "jump by field".

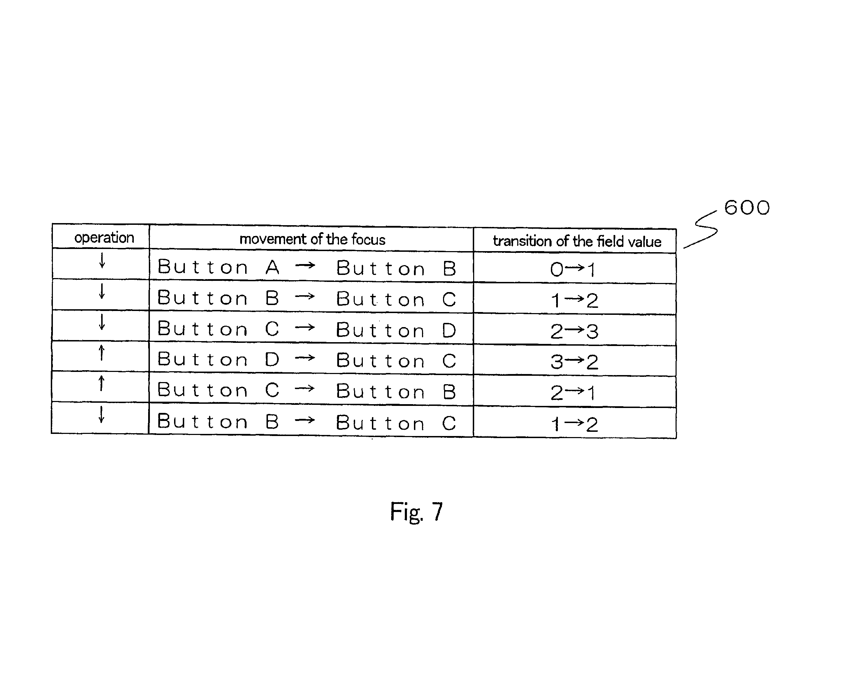

Fig. 7 shows operational examples of keys. These operational examples shows changes of the button to be selected and changes in the field value when keys in the arrow directions shown in the "operation" column are depressed in sequence, with the field value of the button A set to "0" as an initial value.

When the button A has been selected as an initial value, and the downward key is depressed, the button B is selected, and "1" is added to the field value "0", thereby updating the field value to "1". When the downward key is further depressed, the focus moves from the button B to the button C, and "1" is added to the field value "1", thereby updating the field value to "2". When the downward key is still further depressed, the focus moves from the button C to the button D, and "1" is added to the field value "2", thereby updating the field value to "3". Next, when the upward key is depressed, the focus moved from the button D to the button C, which is located thereabove, and the field value is updated from "3" to "2". In this way, when operations are performed up to the operation shown in the last line in Fig. 7, the button C is ultimately focused, and the field value becomes "2". Here, by depressing the determination key, the contents named "jump 2" is displayed in the area 305 in accordance with the definition of jump by field shown in Fig. 5.

Here, an example is shown that an image properly corresponding to an interactive component cannot be selected when attempting to simply select, by a pointing device, the above-described interactive component produced on the premise of being operated by an RC.

For example, when the contents shown in Fig. 4 performs an action according to the correspondence table 400 in Fig. 5, it is assumed that the initial position of an interactive component is the button A, and that the field value is "0". When, for example, the button C is depressed by the pointing device, if the action defined as "determination" operation of the button C is simply performed, the field value remains "0" of the initial value without change in image. That is, the contents do not perform the action intended by the producer thereof.

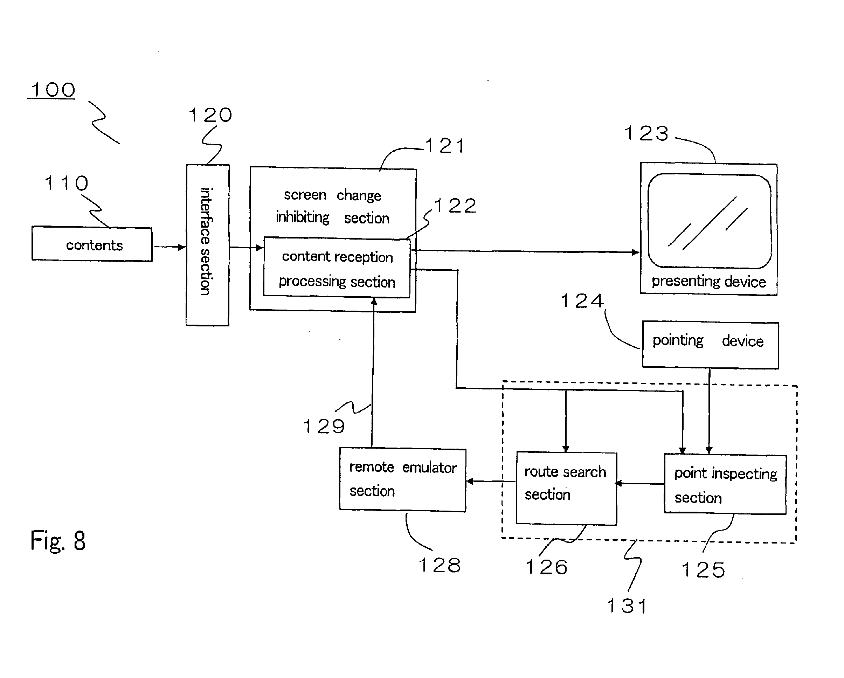

Accordingly, taking the above-described contents as an example, an interactive content presenting device and method that cause these contents to act by using a pointing device as in the case of the RC operation, will be described with reference to Figs. 8 to 10.

Fig. 8 shows important sections of an interactive content presenting device 100 used in this embodiment. In this embodiment, a case where contents are inputted to the interface section of the interactive content presenting device 100 via broadcast waves, a communication line, or the like is illustrated. When receiving interactive contents from a recording medium such as a compact disk, the interactive content presenting device 100 may be configured to input them via a disk reader (not shown) or the above-described interface section.

Hereinafter, instances of contents inputted via broadcast waves, a communication line, or the like will be described. These contents are inputted to the interactive content presenting device 100 via an interface section 120. Here, a tuner for an ordinary data broadcast receiver, a section that processes code correction, the extension of compressed information, or the like may be provided inside or outside the interactive content presenting device 100. In this embodiment, a case where outputs from an broadcast receiving section located on the outside are received by the interface section 120 is taken as an example.

The contents 110 inputted to a screen change inhibiting section 121 are converted into corresponding image data by a content reception processing section 122, and are displayed on a presenting device 123, serving as a monitor for the interactive content presenting device 100.

Here, the interactive content presenting device 100 may be configured to once store one portion or the entirety of the inputted contents into a storage section constituted of a magnetic disk, semiconductor memory, or the like. However, this storage section has not to be used depending on the data amount or construction of contents. Alternatively, this storage section may be used as a storage section for data necessary for various processes described later.

While watching contents (see Fig. 4) displayed on the screen of the presenting device 123, a viewer uses a pointing device 124 such as the above-described mouse or touch panel to indicate a desired button position out of the buttons A, B, C, and D, which are interactive components. By indicating this position, the designated coordinates on the pointing device 124 is outputted to a point inspecting section 125. In the point inspecting section 125, the coordinates on the pointing device 124 are converted into coordinates on the screen of the presenting device 123, and comparisons are made between the converted coordinates (or positional information) and the coordinates (or positional information) of each of the interactive components from the content reception processing section 122, whereby it is detected which button was selected.

Here, in the contents, it is assumed that the button A has been selected as an initial value (home position). Therefore, when a button is newly designated on an initial screen by using the pointing device 124, the button A and the newly designated button become known buttons.

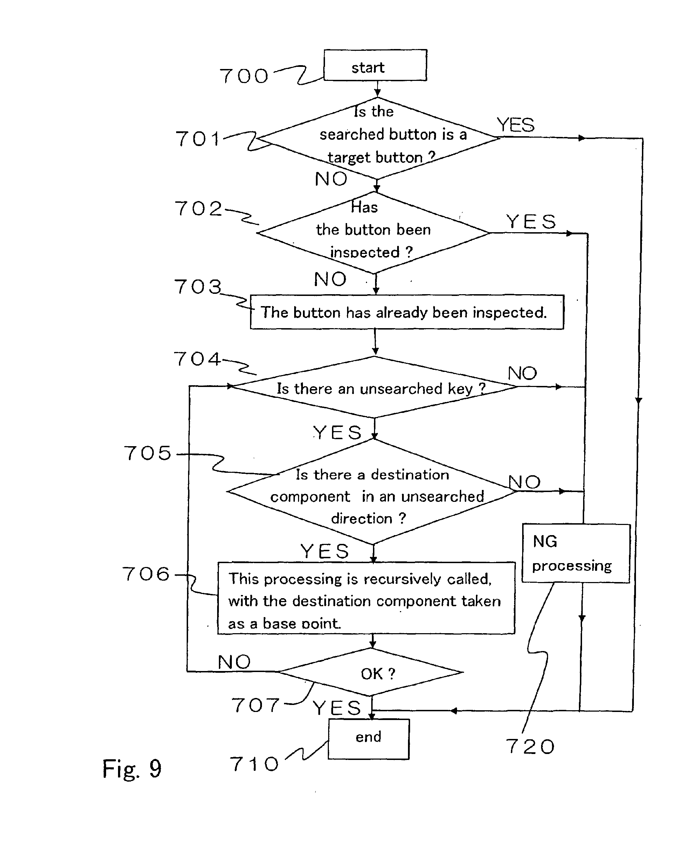

Next, the route when the positional relationship between the two buttons is selected by the up, down, right, and left direction keys is searched, namely, "what keys of the up, down, right, and left direction keys to be depressed, and in what order these keys are to be depressed for reaching" the newly selected button from the button A, is searched by a route search section 126, and thereby a key string (direction string) showing directions is produced. The production of the direction string will now be described with reference to Fig. 9, which shows a processing flowchart for producing this direction string.

In step 700, the route search processing is started, and in step 701, after the destination button corresponding to each of the direction keys has been searched, it is determined whether the searched button is a target button, namely, the button selected by the pointing device 124. If, for example, the button B has been selected by the pointing device 124, it is determined, in step 701, whether the button A coincides with the button B, by comparison them. If the button A coincides with the button B (YES in step 701), the processing is completed (step 710).

If the button A does not coincide with the newly selected button B in step 701 (NO in step 701), it is inspected that the button A has already been inspected (step 702). If the button A has already been inspected (YES in step 702), upon determining that the route search has failed, the processing is completed (steps 720 and 710). If the button A has not yet been inspected (NO in step 702), upon determining that the button A has already been inspected (step 703), the processing proceeds to the next step.

In step 704, it is determined whether there is an unsearched keys out of the up, down, right, and left keys. If there is an unsearched keys (YES in step 704), it is determined, in step 705, whether there is a destination component in unsearched directions with the button A taken as a base point. If there is no destination component (NO in step 705), the processing is completed (step 710) through NG processing in step 720. On the other hand, if there is a destination component (YES in step 705), information on the button as a destination button, is acquired, and this processing is recursively called up in step 706, with the destination component taken as a base point, whereby a route search from the component to the button designated by the pointing device 124 is performed.

Next, in step 707, it is determined whether the route search in step 706 has succeeded. If the route search has succeeded (YES in step 707), this search processing is completed (step 710). If the route search has not succeeded (NO in step 707), the proceeding returns to step 704, and it is determined whether there is an unsearched key. If there is an unsearched key, the proceeding proceeds to step 705.

On the other hand, in step 704, if there is no unsearched key (NO in step 704), this means that the button designated by the pointing device 124 has been unable to be searched, and hence, in step 720, NG processing (step 720), such as error display and display urging a retrial, is performed, thereby completing the searching process.

By the processing shown by this search processing flowchart, the key string, i.e., the direction string when the movement from the button A to the button selected by the pointing device 214 is performed by the up, down, right, and left keys of the RC, is produced.

Thus, because the coordinates on the screen by a mouse have been converted by the point inspecting section 125 and route searching section 126, into the direction string (key string) indicating directions, a coordinate converting section 131 is constituted by the point inspecting section 125 and route searching section 126.

The direction string (key string) information corresponding to the produced direction string (key string) is outputted to an RC emulator section 128 (see Fig. 8) that emulates key operational processing, then an emulation signal 129 that has been converted into direction string (key string) information from the RC, corresponding to the above-described direction string (key string) information is produced by the RC emulator section 128, and it is outputted to the content reception processing section 122.

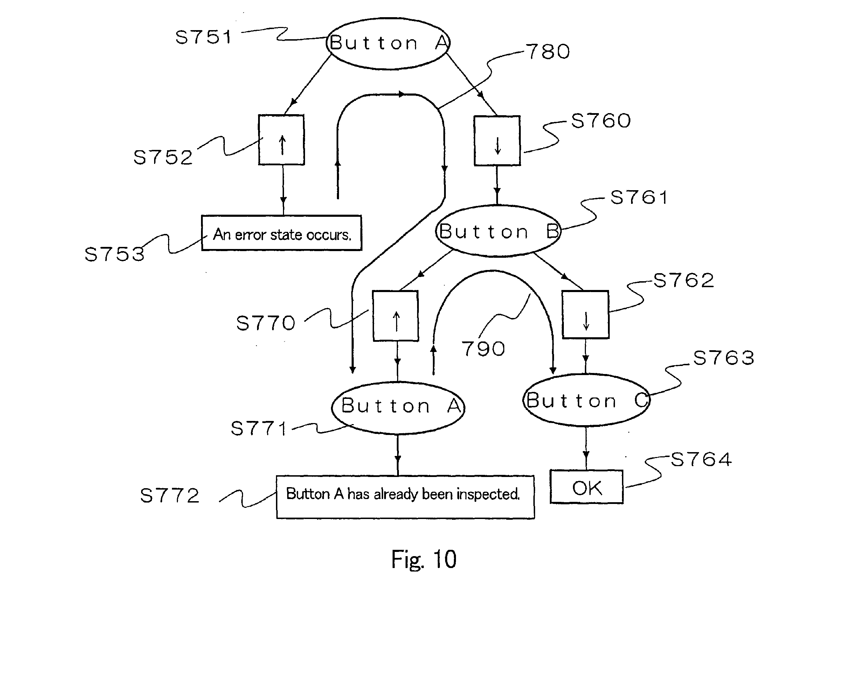

The above-described search example by the route search processing will be explained with reference to Fig. 10. This search example corresponds to a case where the button A is currently selected, and the button C is designated by the pointing device 124. For the sake of simplifying explanation, searches in the right and left directions is omitted.

In Fig. 10, the arrow "↑" in a box shows an operation by the upward key, while the arrow "↓" shows an operation by the downward key. Here, the button A has been selected (state 751), and the moving directions are only up and down directions, and therefore, when making an upward movement (state 752), an error state occurs (state 753) since there is no interactive component in the upward direction. When again going from the state 751 into a movement to the unsearched downward direction (state 760), the destination component is found to be a button B (state 761), and this destination component button B and the interactive component button C indicated by the pointing device 124 are compared with each other. Because these two interactive buttons are different with each other, a destination component is now searched as to each of the keys with the button B taken as a base point. When making an upward movement (state 770), the button A can be found as a destination component (state 771). Since the button A as a destination component has already been inspected, returning to state 761, a movement to the unsearched downward direction is made (state 762). This destination component is the button C (state 763), and this is compared with the button C that is the interactive component designated by the pointing device. Because these two interactive components coincide with each other, the search is completed (state 764). Therefore, it can be seen that the route from the button A to the button C is "↓" and "↓".

Meanwhile, routes 780 and 790 in Fig. 10 show routes by each of which the above-described states make a transition.

In the above descriptions, the route search is performed by way of other interactive components until a target interactive component has been found. Here, it is preferable to keep an image corresponding to the interactive component providing a base point until the target interactive component can be found, without displaying the images corresponding to the other interactive components. This eliminates inconveniences of viewership having to watch unnecessary images.

As describe above, since the first embodiment allows interactive components included in contents to be selected by using the pointing device, it is possible to interact with contents even in equipment without a direction indicating function.

In the above-described embodiment, descriptions were made taking contents from data broadcast as an example. However, after receipt of contents via a communication line, an interaction with these contents may be performed by the above-described content presenting device.

Besides, after reading interactive contents via the interface section 120 of the content presenting device 100, or via a reader for reading a recording medium, such as a floppy and optical disk, provided in the content presenting device 100, the interaction may be performed by using a pointing device such as a mouse, as described above.

### [Second Embodiment]

In the first embodiment, the processing shown in Fig. 9 was executed from an interactive component providing a base point to the interactive component selected by the pointing device, and thereby a key operation string was produced.

Instead of this producing method for the direction string (key string), in this second embodiment, a correspondence table of the direction string (key string) of the up, down, right, and left direction keys when a movement between interactive components is made, is provided in the route searching section, and the direction string (key string) is searched with respect to the bas point and destination interactive component, in accordance with the correspondence table.

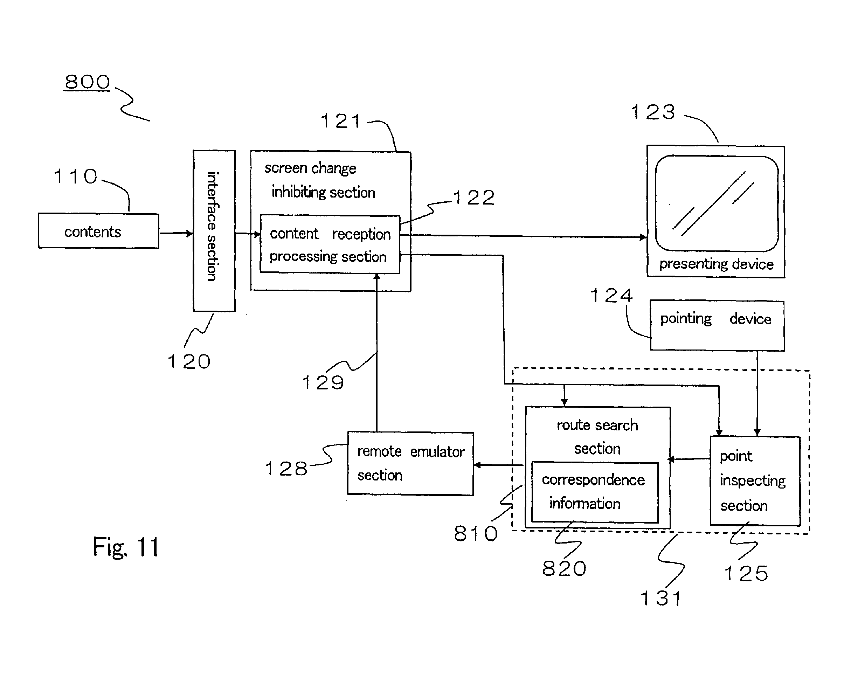

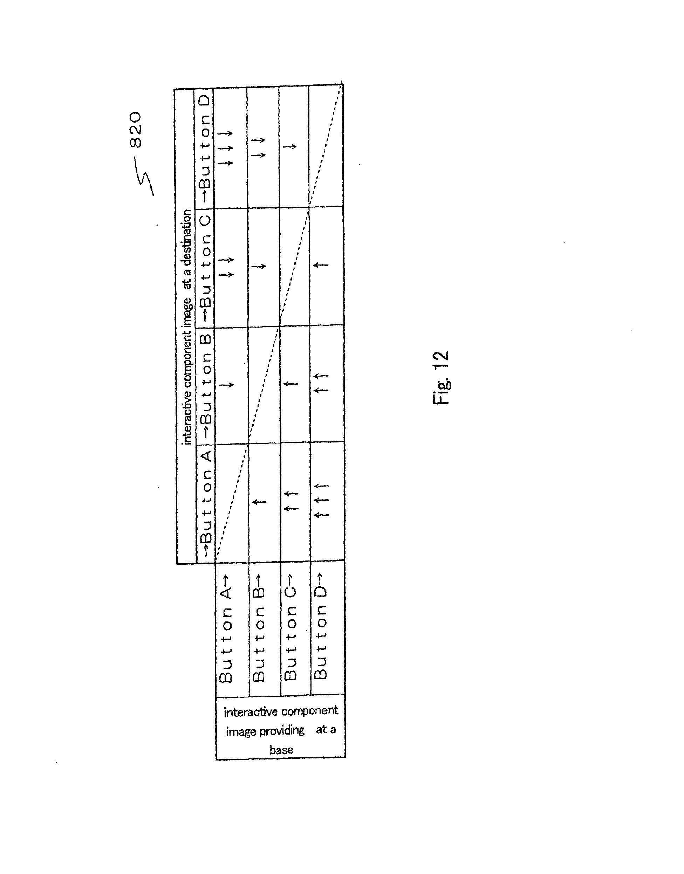

In the second embodiment also, descriptions will be made taking the contents explained in the first embodiment as an example. Fig. 11 shows one example of a content presenting device according to the present invention. Fig. 12 shows a correspondence table when interactive components are buttons A, B, C, and D constituted of longitudinally arranged interactive components in line.

In Fig. 11, components of the content present device 100 that have equivalent or like functions as those of the content present device 100 (see Fig. 8) described in the first embodiment, are given the same reference numerals. The content presenting device 800 according to the second embodiment differs in a route searching section 810 from the content presenting device 100 according to the first embodiment. In the second embodiment, the correspondence information 820 (see Fig. 12) that shows routes when a movement between buttons is made by key operation strings is stored in the route search section 810. The correspondence information 820 shown in Fig. 12 is constituted by arranging, in a column, the buttons A, B, C, and D that are each interactive components providing a base point, and arranging, in a row, the buttons A, B, C, and D that are each destination components. For example, this correspondence table shows that, when the button A is taken as a base point, and the button C is taken as a destination, the operation key string is "↓↓", namely, that the downward key is operated two times.

Also, this correspondence table shows that, when the button D is taken as a base point, and the button A is taken as a destination, the operation key string is "↑↑↑", namely, that the upward key is operated three times.

In the content presenting device 800, information on the button currently selected from the content reception processing section 122, that is, information on the button providing a base point, and information on the target button from the point inspecting section 125, that is, information on the destination button are each inputted to the route search section 810. Therefore, by using the correspondence information 820, the direction string (key string) from the button providing a base point to the destination button is searched by using the upward and downward keys of the RC, and the searched direction string (key string) information is outputted to the RC emulator section 128. Then, the direction string (key string) information is converted by the RC emulator section 128 into a signal similar to a signal from the RC, and is outputted to the content reception processing section 122, thereby changing screen information of contents to update an image on the screen of the presenting device 123.

In the second embodiment also, since the coordinate conversion is performed by the point inspecting section 125 and route searching section 810, the coordinate conversion section 131 is constituted of the point inspecting section 125 and route searching section 810.

As in the case of the first embodiment, an interaction with contents may be performed as described above, by receiving contents via a communication line or from a recording medium.

In the second embodiment, in addition to the same effect as that of the first embodiment, the route search section is arranged to store direction string (key string) information corresponding to the movement between interactive components, and therefore, the route between interactive components can be searched at a high speed.

### [Third Embodiment]

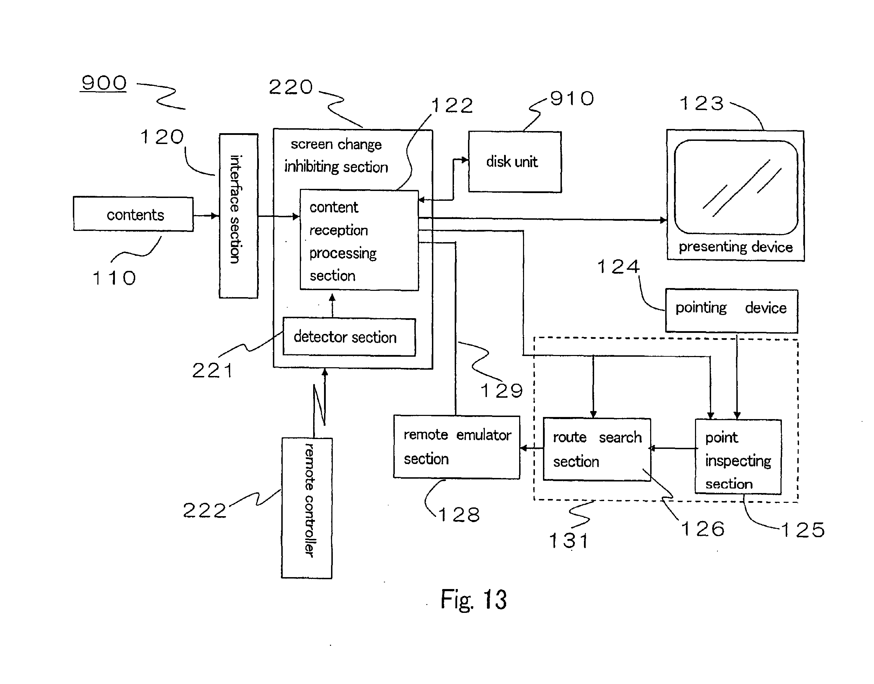

A third embodiment will be described with reference to Fig. 13. In a content present device 900, components having equivalent or like functions as those of the content present device 100 shown Fig. 8 are given the same reference numerals.

The content present device 900 is configured to include a remote controller 222 (RC), and a detector section 221 provided in a screen change inhibiting section 220 for detecting a signal from the remote controller 222. Also, a disk unit 910 is connected to the content reception processing section 122, and this disk unit 910 is made capable of mounting a recording medium storing the interactive contents that have been described in the first embodiment. With these features, the content presenting device 900 makes it possible to interact with contents displayed on the presenting device 123 by using either of the pointing device 124 and RC. Furthermore, it becomes also possible to interact with interactive contents stored in a recording medium, other than interactive contents received by the use of data broadcast or a communication line.

### Industrial Applicability

According to the interactive content presenting device and method of the present invention, a pointing device that designates or indicates coordinates on a display device, such as a monitor to display contents, is used to converts the relationship between the designated or indicated coordinates and a predetermined position on the display device into a direction or a combination of a plurality of directions. Therefore, contents produced on the premise of interacting by using a direction indicating function of a remote controller or the like, can interact using the pointing device.

## Claims

1. An interactive content presenting device, comprising:
a display section for displaying an image;
a coordinate input section for designating coordinates on the screen of the display section;
a coordinate converting section for converting converts the positional relationship between the coordinates designated by the coordinate input section and a predetermined position on the screen of the display section into one direction or a combination of plurality of directions; and
a signal converting section for converting the combination converted by the coordinate converting section into a predetermined signal.

2. An interactive content presenting device, comprising:
an interface section;
a display section for displaying an image;
a content processing section for signal-processing a signal inputted to the interface section into image data to be displayed on the display section;
a coordinate input section for designating coordinates on the screen of the display section;
a coordinate converting section for converting the positional relationship between the coordinates designated by the coordinate input section and a predetermined position displayed on the display section into one direction or a combination of plurality of directions; and
an emulator section for converting the one direction or the combination converted by the coordinate converting section into a predetermined signal,
wherein the predetermined signal converted by the emulator is inputted to the content processing section.

3. An interactive content presenting device, comprising:
an interface section;
a display section for displaying an image;
a coordinate input section for designating coordinates on the screen of the display section;
a content processing section for signal-processing a signal inputted to the interface section into image data to be displayed on the display section;
a coordinate converting section for converting the positional relationship between the coordinates designated by the coordinate input section and a first specified position displayed on the display section into one direction or a combination of plurality of directions reaching the designated coordinates from the first specified position via another specified position; and
an emulator section for converting the one direction or the combination converted by the coordinate converting section into a predetermined signal,
wherein the predetermined signal converted by the emulator is inputted to the content processing section.

4. The interactive content presenting device according to Claim 3, wherein the interface section receives a signal transmitted thereto via radio waves or a line, and wherein the interface section converts the signal into a predetermined signal.

5. The interactive content presenting device according to Claim 3, wherein the interface section converts a signal from a disk unit having a recording medium into a predetermined signal.

6. The interactive content presenting device according to Claim 3, wherein the specified position on the screen is determined by the content processing section.

7. An interactive content presenting device, comprising:
an interface section;
a display section for displaying an image;
a coordinate input section for designating coordinates on the screen of the display section;
a content processing section for signal-processing a signal inputted to the interface section into image data to be displayed on the display section;
a route searching section for searching for a combination of a plurality of directions reaching a second interactive component image from a first interactive component image via another interactive component image, or a direction reaching the second interactive component image from the first interactive component image, in order to obtain the positional relationship between the first interactive component image displayed on the display section and the second interactive component image designated by the coordinate input section; and
an emulator section for converting the combination searched by the route searching section into a predetermined signal,
wherein the predetermined signal converted by the emulator is inputted to the content processing section.

8. The interactive content presenting device according to Claim 7, further comprising a storage section for storing the correlation among the first and second interactive component images and the combination produced by the route searching section.

9. The interactive content presenting device according to Claim 7 or 8, wherein the second interactive component image is designated, and wherein, until the image displayed on the display section is changed to an image corresponding to the designation of the second interactive component image, an image corresponding to the first interactive component image is being displayed on the display section.

10. A content presenting method, comprising:
a first step of designating coordinates on a screen;
a second step of converting the positional relationship between a predetermined position on the screen and the coordinates designated in the first step into one direction or a combination of plurality of directions; and
a third step of converting the converted one direction or combination of the plurality of directions into a predetermined signal.

11. An interactive content presenting method, comprising:
a first step of designating a first position in an image;
a second step of producing one direction or a combination of plurality of directions reaching the first position from a second position via a specified position in the image, in order to obtain the positional relationship between the second position and the first position in the image; and
a third step of converting the combination into a predetermined signal.

12. The interactive content presenting method according to Claim 10, wherein, in the second step, it is determined, from the second position, whether there is the specified position in the plurality of directions, and wherein the interactive content presenting method comprises a step of determining whether the specified position is the first position, when there is the specified position.

13. A recording medium recording the interactive content presenting method as recited in any one of Claims 10 to 12.

14. A program describing the interactive content presenting method as recited in any one of Claims 10 to 12.

15. An interactive content presenting program in an interactive content presenting device including a display section that displays, on a screen, contents and an interactive component image corresponding to the contents, and a coordinate input section that inputs coordinates corresponding to the display section for inputting data by the selection of the interactive component image, the interactive content presenting program comprising the steps of:
receiving the correlation between a plurality of interactive component images displayed on the screen and a cursor key for selecting the interactive component image;
inputting, from the coordinate input section capable of designating coordinates, the position in which the plurality of interactive component images has been displayed;
producing, from the received correlation, a combination of directions of the cursor key for moving from the inputted coordinates to a designated interactive component image; and
designating an interactive component image based on the produced combination of directions of the cursor key.

16. An interactive content presenting device that selects an interactive component image displayed on the screen, based on the program as recited in Claim 14 or 15.
